# EUROPEAN PATENT APPLICATION

(11) **EP 1 406 146 A1**
(43) Date of publication of application: **07.04.2004**
(21) Application number: 02022476.2
(22) Date of filing: 04.10.2002
(51) Int. Cl.: G06F 1/16

(54) **Personal digital assistant component with wireless communication functions**

(71) Applicant: High Tech Computer Corp., Taoyuan (TW)
(72) Inventor: Lin, Yao-Chung, Shindian City, Taipei (TW); Lin, Wen-Pin, Shindian City, Taipei (TW)
(74) Representative: Weber, Joachim, Dr.

(57) **Abstract**

The invention provides a PDA (personal digital assistant) component whose pen slot in which the stylus is placed is formed by the concealed slot inside the PDA body and the passage inside the signal emitting/receiving device. The PDA component includes: a PDA body with a concealed slot, a signal emitting/receiving device with a passage, and a stylus. Of which, the concealed slot has an opening on the upper surface of the PDA body; the signal emitting/receiving device situated on the upper surface of the PDA body performs wireless communication functions while the passage forms a pen slot together with the concealed slot situated underneath; the stylus matches with the pen slot and is placed therein.

## Description

This application incorporates by reference Taiwan application Serial No. 090217056, Filed Oct. 05, 2001.

### BACKGROUND OF THE INVENTION

### Field of the Invention

The invention relates in general to a PDA (personal digital assistant) component with wireless communication functions, and more particularly to a PDA with wireless communication function, which includes a stylus combined with an antenna.

### Description of the Related Art

Living in today's society with rapid advance in technology, the modern people who are occupied with their business and are in the pursuit of efficiency will find themselves are shifting from a conventional diary book to an electronic diary device. The PDA (personal digital assistant) in particular has won the popularity of modern people not only because it is light in weight, fast in starting up, flexible in the installation of application software, but also has a high augmentation capacity and a wide ranged of accessories. The PDA provides the user with multiple functions of great convenience such as schedule planning, phonebook enquiring, agenda reminding, memo taking, e-mailing and entertaining games.

The PDA user uses a stylus to tick or write as the input method. In order to achieve a better portability and a pleasing appearance, the length of the stylus is normally no longer than that of the PDA. In order to facilitate writing, a stylus cannot be too short; normally, it is of the same length with that of the PDA. Due to the light, thin, short and small features in the design of PDA, the stylus has become as short as 10 to 12 cm or even shorter in order to be compatible with the shrinking features in the design of PDA. However, such a change in stylus length has already influenced user's convenience. The inconvenience in writing caused by a short stylus becomes even worse when the user needs to input a large amount of data. For example, the stylus slippers around or it even comes off the hand. Generally speaking, it needs a pen slot to place the stylus. Therefore, it is the one of the objectives of the invention to design a light, thin, short and small PDA without causing any inconveniences in using a stylus to input.

Besides, nowadays, some PDAs have the functions of wireless communication, i.e., the PDA can be used as a mobile phone. Generally, an antenna must be equipped in the PDA to provide wireless communication functions. In this way, a PDA with wireless communication functions has at least three components: the stylus, the pen slot, and the antenna. The currently available PDA with wireless communication functions has the stylus and antenna, which occupy the limited space of the PDA respectively. This kind of design will limit the future development of the PDA to become lighter, thinner, shorter and smaller. Therefore, it is one of the objectives of the invention to maintain the PDA's features of being light, thin, short and small.

### SUMMARY OF THE INVENTION

It is therefore an object of the invention to provide a PDA (personal digital assistant) component whose stylus can be longer than that of the PDA body. Besides, an antenna can be equipped in the PDA with wireless communication function without increasing the size of the PDA.

The personal digital assistant includes a PDA body, a signal emitting/receiving device with a passage, and a stylus. The PDA body includes a concealed slot while the concealed slot has an opening on the upper surface of the PDA body. The signal emitting/receiving device according to the invention situated on the upper surface of the PDA body performs wireless communication functions. The signal emitting/receiving device includes a passage. The concealed slot inside the PDA body, which is situated beneath the passage, forms a pen slot together with the passage. The stylus according to the invention is compatible with the pen slot. The top end of the stylus according to the invention and the upper part of the passage has a convex piece and a concavity respectively such that the stylus can be held firmly within the slot.

### BRIEF DESCRIPTION OF THE DRAWINGS

Other objects, features, and advantages of the invention will become apparent from the following detailed description of the preferred but non-limiting embodiments. The description is made with reference to the accompanying drawings in which:

FIG. 1 illustrates a personal digital assistant component according to a preferred embodiment of the invention wherein the stylus is separate from other elements; and

FIG. 2 illustrates a personal digital assistant component according to a preferred embodiment of the invention wherein the stylus is placed within the slot.

### DESCRIPTION OF THE PREFERRED EMBODIMENT

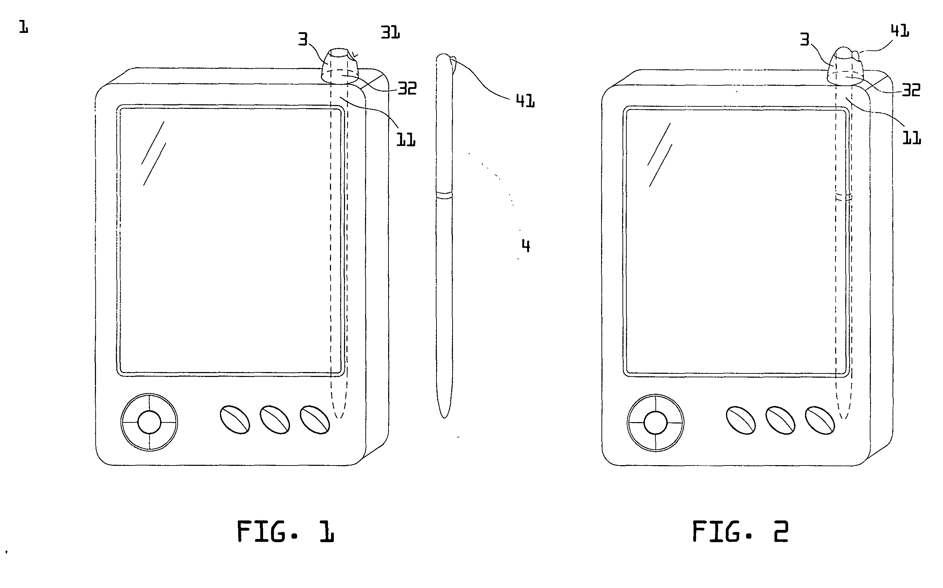

The invention provides a PDA (personal digital assistant) component with wireless communication functions. The component aims to maximize the length of the stylus to facilitate the user's writing convenience under the circumstance of a shrinking feature in PDA design. Referring first to FIG. 1, an illustration of a PDA component with wireless communication functions according to a preferred embodiment of the invention is shown wherein the stylus 4 is separate from other elements. The component according to the invention includes: a PDA body 1, a signal emitting/receiving device 3, and a stylus 4. Of which, the PDA body 1 includes a concealed slot 11 while the concealed slot 11 has an opening in the upper surface of the PDA body 1.

The signal emitting/receiving device 3 according to the invention is situated on the upper surface of the PDA body 1 to perform mobile phone (wireless communication) functions. The signal emitting/receiving device 3 has a passage 32 and the above-mentioned concealed slot 11 is situated underneath. The concealed slot 11 thus forms a pen slot together with the passage 32.

The size of the stylus 4 according to the invention is compatible with the pen slot so the stylus 4 can be placed within. Referring to FIG. 2, an illustration of a personal digital assistant component according to a preferred embodiment of the invention wherein the stylus 4 is placed within the slot. According to the above design, the length of the pen slot formed by the concealed slot 11 and the passage 32 can be longer than that of the PDA body 1 ; therefore, the stylus 4 placed within obtains more flexibility regarding its length. Any stylus whose length is shorter than that of the pen slot is included in the scope of the invention. In terms of a preferred embodiment, the length of the stylus 4 is longer than that of the PDA body 1. Furthermore, the stylus 4 can be held firmly within the pen slot via a lock-joint mechanism.

Referring to FIG. 1, the signal emitting/receiving device 3 according to the invention further includes a concavity 31 situated at the upper part of the passage 32, while the stylus 4 according to the invention further includes a convex piece 41 situated at top of the stylus 4. Since the convex piece 41 matches perfectly with the concavity 31, the stylus 4 will be held firmly via the join of the lock-joint mechanism and the pen slot. The invention is not limited by the above-mentioned embodiments. Any structures which are able to hold the stylus 4 firmly within the pen slot are encompassed in the scope of the invention. Besides, it can be clearly understood from the above drawings and explanations that the signal emitting/receiving device according to the invention is hollow by nature.

A personal digital assistant component with wireless communication functions according to the invention is disclosed in the above preferred embodiments. According to the invention, both the stylus 4 and the pen slot formed by the passage 32 and the concealed slot 11 are extended as much as possible. The length of the stylus equals to the summation of the length of the PDA and that of the signal emitting/receiving device 3. By exploiting the space design of the PDA, the join of the stylus 4 and the emitting/receiving device 3 allows the stylus length to be further extended reducing the inconvenience caused by using too short a stylus, e.g., slippery or coming off the hand easily. Since the stylus is placed within the antenna which is hollow inside, the overall PDA size can be further reduced.

While the invention has been described by way of example and in terms of the preferred embodiment, it is to be understood that the invention is not limited to the disclosed embodiment. To the contrary, it is intended to cover various modifications and similar arrangements and procedures, and the scope of the appended claims therefore should be accorded the broadest interpretation so as to encompass all such modifications and similar arrangements and procedures.

## Claims

1. A PDA (Personal Digital Assistant) component with wireless communication functions, comprising at least:
a PDA body, a concealed slot having an opening outside said PDA body;
a signal emitting/receiving device, a passage inside situated outside said PDA body performing signal emitting and receiving, wherein said passage and said concealed slot form a pen slot; and
a stylus placed within said pen slot.

2. The PDA component according to claim 1, wherein the top end of said stylus further comprises a convex piece.

3. The PDA component according to claim 1, wherein the upper part of said passage further comprises a concavity matching with said convex piece.

4. The PDA component according to claim 1, wherein the length of said pen slot is longer than that of said PDA body.

5. The PDA component according to claim 1, wherein the length of said stylus is longer than that of said PDA body.

6. A PDA (personal digital assistant) with wireless communication functions comprising at least:
a hollow signal emitting/receiving device used to perform wireless communication; and
a stylus placed inside said hollow signal emitting/receiving device.

7. A PDA component according to claim 6 further comprising:
a concealed slot having an opening situated outside said PDA, moreover, said signal emitting/receiving device comprises a passage which forms a pen slot together with said concealed slot allowing said stylus to be placed within.

8. The PDA component according to claim 6, wherein said stylus further comprises a convex piece at its top end.

9. The PDA component according to claim 8, wherein the upper part of said passage further comprises a concavity matching with said convex piece.

10. The PDA component according to claim 7, wherein the length of said pen slot is longer than that of said PDA body.

11. The PDA component according to claim 6, wherein the length of said stylus is longer than that of said PDA body.
